(19) Europäisches Patentamt
European Patent Office
Office européen des brevets

(11) EP 4 589 365 A1

(12) **EUROPEAN PATENT APPLICATION**
published in accordance with Art. 153(4) EPC

(43) Date of publication:
**23.07.2025 Bulletin 2025/30**

(21) Application number: **23865562.5**

(22) Date of filing: **13.09.2023**

(51) International Patent Classification (IPC):
*G02C 7/04* (2006.01) *C08F 290/06* (2006.01)

(52) Cooperative Patent Classification (CPC):
**C08F 220/10; C08F 290/06; G02C 7/04**

(86) International application number:
**PCT/JP2023/033357**

(87) International publication number:
**WO 2024/058213 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022 JP 2022146674**

(71) Applicant: **NOF Corporation**
**Shibuya-ku**
**Tokyo 150-6019 (JP)**

(72) Inventors:
- **IWAKIRI, Norio**
**Kawasaki-shi, Kanagawa 210-0865 (JP)**
- **TANAKA, Yoshiki**
**Kawasaki-shi, Kanagawa 210-0865 (JP)**
- **OZAKI, Shunsuke**
**Kawasaki-shi, Kanagawa 210-0865 (JP)**

(74) Representative: **Hoffmann Eitle**
**Patent- und Rechtsanwälte PartmbB**
**Arabellastraße 30**
**81925 München (DE)**

(54) **MONOMER COMPOSITION FOR CONTACT LENS, POLYMER FOR CONTACT LENS, AND CONTACT LENS**

(57) To provide a monomer composition for a contact lens and a polymer for a contact lens that can be used to produce a contact lens for providing a wearer with excellent comfort in wearing due to good surface hydrophilicity, good antifouling properties, and good oxygen permeability by using, as a composition for a contact lens, a composition containing a phosphorylcholine group-containing monomer, a phosphorylcholine group-containing silicone macromer, a silicone monomer or macromer other than the phosphorylcholine group-containing silicone macromer represented by a formula (2), a hydroxy group-containing hydrophilic monomer, an amide group-containing hydrophilic monomer, and a crosslinking agent, and to provide a contact lens.

EP 4 589 365 A1

## Description

TECHNICAL FIELD

The present invention relates to a monomer composition for a contact lens, a polymer for a contact lens, and a contact lens.

BACKGROUND ART

Contact lenses have been used to improve eyesight since the 1950s. The first contact lenses are hard contact lenses, and although these lenses are still in use today, they are not as widely used due to poor initial comfort. In 1960, soft contact lenses made of hydrogel have been developed, and due to ease and convenience thereof, the number of wearers wearing them has increased rapidly, and now the soft contact lenses are widely used by the general public.

However, the conventional-type soft contact lenses do not provide a sufficient amount of oxygen to the cornea of the eye, posing a safety issue when the soft contact lenses are worn for a long period of time. This is because the cornea does not receive oxygen from the blood, unlike other tissues. When sufficient oxygen does not reach the cornea, there is a possibility that the cornea is damaged, and a long period of oxygen deprivation is not preferred for the cornea. On the other hand, in recent years, in order to solve this issue, silicone hydrogel contact lenses have been developed as contact lenses having improved safety. The silicone hydrogel contact lenses allow sufficient oxygen to penetrate through the contact lens to the cornea, minimizing adverse influences on corneal health.

However, since the silicone hydrogel contact lenses contain a hydrophobic silicone monomer or macromer, it is difficult to obtain contact lenses having good comfort in wearing using only these compounds, and a hydrophilization treatment is necessary. In addition, lipids in tears can be deposited on the lenses in wearing, and there is a possibility that discomfort occurs and the eye health of the wearer is adversely influenced. There is a demand for contact lenses also having excellent antifouling properties.

As a method for subjecting contact lenses to a hydrophilization treatment, for example, there has been disclosed a method of imparting surface hydrophilicity and antifouling properties to a contact lens by graft polymerization of a hydrophilic monomer into a surface of the contact lens that has been subjected to a plasma treatment (Patent Literature 1). In addition, there has been disclosed a method for producing a contact lens having excellent hydrophilicity and lubricity by coating a surface of the contact lens with a polymer (Patent Literature 2). These surface treatments require complicated steps, which is undesirable for mass production.

Patent Literatures 3 and 4 disclose compositions containing MPC and a siloxanyl group-containing itaconic acid diester monomer having a primary hydroxy group, and disclose that a polymer of the composition can be used for contact lenses. The contact lens disclosed in Patent Literature 3 exhibits good results in terms of hydrophilicity and oxygen permeability of the lens surface, while the contact lens according to Patent Literature 4 exhibits good results in terms of elongation at break and peelability in addition to these. In these patent literatures, contact lenses can be easily obtained without a surface treatment, but no consideration is given to antifouling properties.

PRIOR ART DOCUMENTS

PATENT LITERATURE

Patent Literature 1: JP2003-215509A
Patent Literature 2: JP2018-022174A
Patent Literature 3: WO2018/135421
Patent Literature 4: WO2020/054711

SUMMARY OF INVENTION

OBJECT TO BE ACHIEVED BY THE INVENTION

An object of the present invention is to provide a monomer composition for a contact lens and a polymer for a contact lens that can be used to produce a contact lens for providing a wearer with excellent comfort in wearing due to good surface hydrophilicity, good antifouling properties (coatability), and good oxygen permeability, and to provide a contact lens.

MEANS FOR ACHIEVING THE OBJECT

As a result of intensive research, the inventors of the present invention have found that the above problems can be solved by using, as a composition for a contact lens, a composition containing a phosphorylcholine group-containing monomer, a phosphorylcholine group-containing silicone macromer, a silicone monomer or macromer other than the phosphorylcholine group-containing silicone macromer represented by the following formula (2), a hydroxy group-containing hydrophilic monomer, an amide group-containing hydrophilic monomer, and a crosslinking agent. Thus, the present invention has been completed.
That is, the present invention is as follows.

1. A monomer composition for a contact lens containing:

(A) a phosphorylcholine group-containing monomer represented by the following formula (1);
(B) a phosphorylcholine group-containing silicone macromer represented by the following formula (2);
(C) a silicone monomer or macromer other than the phosphorylcholine group-containing silicone macromer represented by the following formula (2);
(D) one or more hydroxy group-containing hydrophilic monomers selected from the group consisting of hydroxyethyl (meth)acrylate, hydroxypropyl (meth)acrylate, hydroxybutyl (meth)acrylate, hydroxyethyl (meth)acrylamide, ethylene glycol monovinyl ether, glycerol methacrylate, and diethylene glycol monovinyl ether;
(E) one or more amide group-containing hydrophilic monomers selected from the group consisting of N-vinyl-2-pyrrolidone, N,N-dimethylacrylamide, N,N-diethylacrylamide, N-methyl-N-vinylacetamide, and N-vinylacetamide; and
(F) a crosslinking agent, in which

a content of the component (A) is 5 mass% to 25 mass%, a content of the component (B) is 10 mass% to 60 mass%, a content of the component (C) is 5 mass% to 40 mass%, a content of the component (D) is 5 mass% to 40 mass%, a content of the component (E) is 0 mass% to 20 mass%, and a content of the component (F) is 0 mass% to 2.5 mass%, with respect to 100 mass% as a total of the components (A) to (F) in the composition.

[Chem. 1]

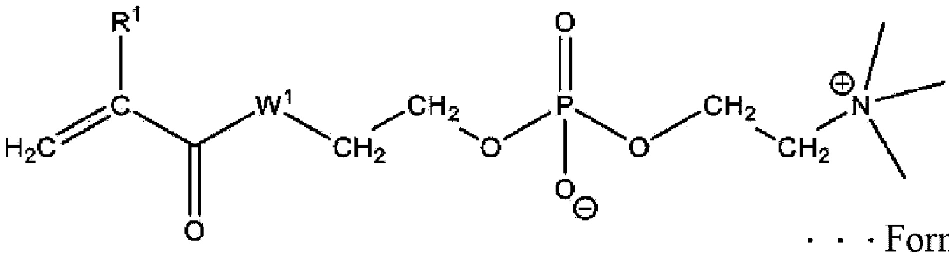

· · · Formula (1)

[in the formula (1), $R^1$ is H or $CH_3$, and $W^1$ is O or $NR^4$, where $R^4$ is H or an alkyl group having 1 to 4 carbon atoms],

[Chem. 2]

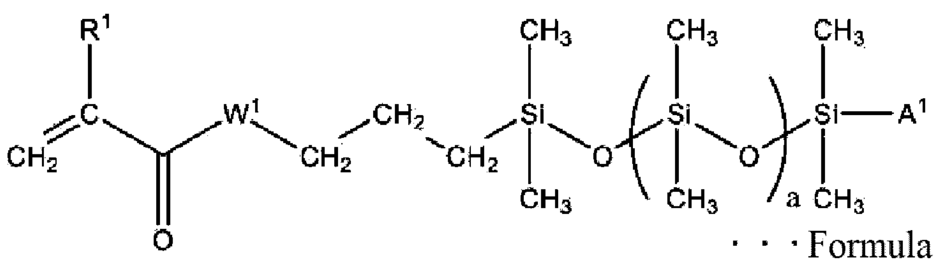

· · · Formula (2)

[in the formula (2), $R^1$ is H or $CH_3$, $W^1$ is O or $NR^4$, where $R^4$ is H or an alkyl group having 1 to 4 carbon atoms, a is an integer of 1 to 100, and $A^1$ is represented by a formula (3)],

[Chem. 3]

—Y—Z ・・・Formula (3)

[in the formula (3), Y is represented by a formula (4), and Z is a phosphorylcholine group represented by a formula (6)],

[Chem. 4]

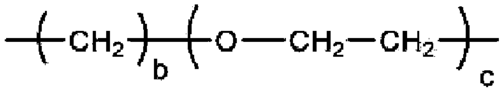

・・・Formula (4)

[in the formula, b is 2 or 3, and c is 0 or 1],

[Chem. 5]

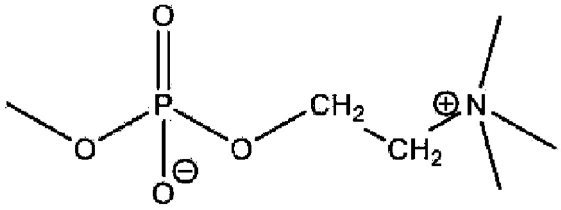

・・・Formula (6)

2. The monomer composition for a contact lens according to the above 1, in which the component (C) is a hydroxy group-containing silicone monomer represented by the following formula (9) or formula (10).

[Chem. 6]

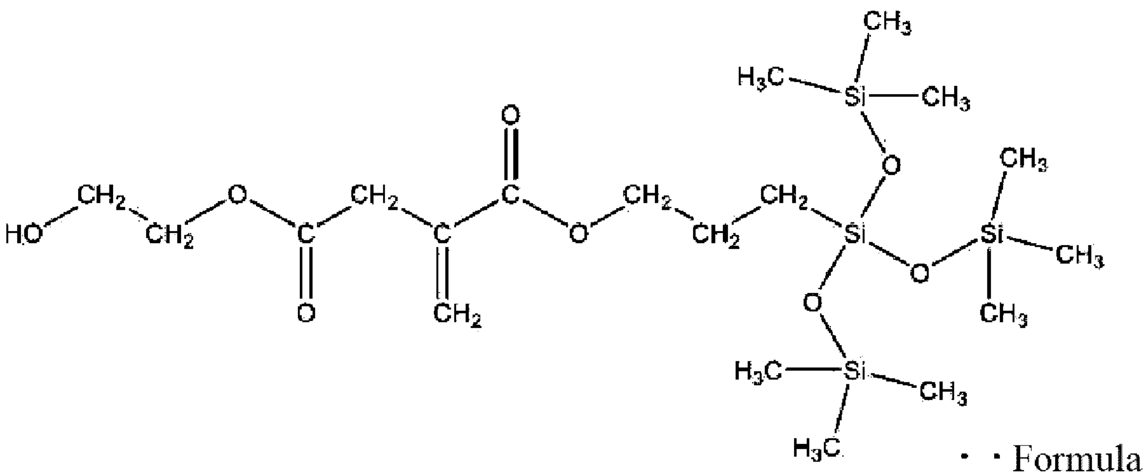

・・Formula (9)

[Chem. 7]

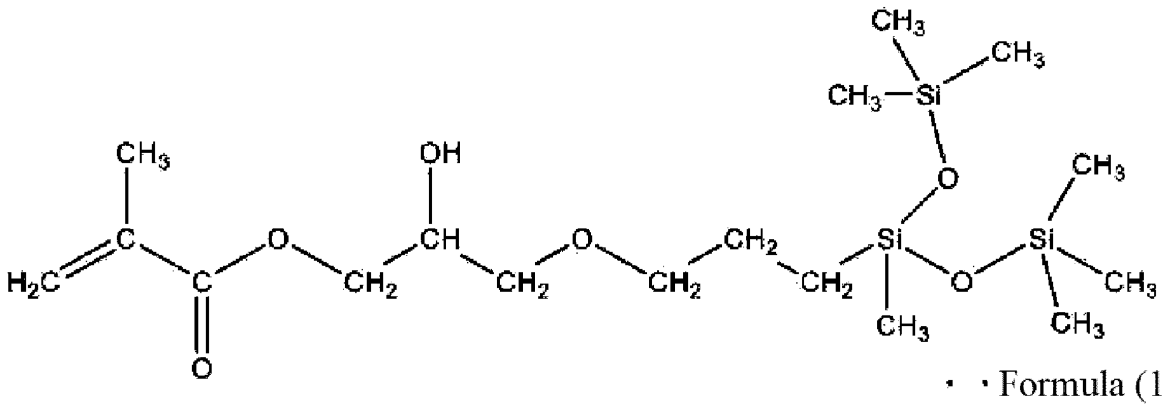

· · Formula (10)

3. The monomer composition for a contact lens according to the above 1 or 2, in which in the monomer composition for a contact lens containing the components (A) to (F), a proportion of a phosphorylcholine group is 10 mass% or more, and a proportion of silicon is 10% or more.
4. A polymer for a contact lens, which is a polymer of the monomer composition for a contact lens according to the above 1 or 2.
5. A contact lens containing:
a hydrate of the polymer for a contact lens according to the above 4.
6. The contact lens according to the above 5, which has an oxygen permeability Dk of $50 \times 10^{-11}$ ($cm^2$/sec)·($mLO_2$/mL $\times$ mmHg) or more.

EFFECTS OF INVENTION

The contact lens according to the present invention is produced using the monomer composition for a contact lens according to the present invention, and can thus simultaneously exhibit very good surface hydrophilicity, a very good water content, good coatability. and good oxygen permeability.

EMBODIMENTS FOR CARRYING OUT THE INVENTION

Hereinafter, the present invention will be described in further detail.
In the present description, in the case where a preferred numerical range (for example, a concentration or weight average molecular weight range) is described in stages, the respective lower limit values and upper limit values can be independently combined. For example, in the description of "preferably 10 or more, more preferably 20 or more, and preferably 100 or less, more preferably 90 or less", a "preferred lower limit value: 10" and a "more preferred upper limit value: 90" can be combined as "10 or more and 90 or less". Further, the description of "preferably 10 to 100, more preferably 20 to 90" may also be rephrased as "10 to 90" in the same manner.
In the present description, "(meth)acrylic" means acrylic or methacrylic, "(meth)acryloyl" means acryloyl or methacryloyl, "(meth)acrylate" means acrylate or methacrylate, "(meth)acrylamide" refers to acrylamide or methacryl(methacryl)amide, and "(meth)acrylic acid ester" refers to an acrylic acid ester or a methacrylic acid ester.
In the present description, hydrophilicity means an ability on a surface of a contact lens to retain a water film.
In the present description, coatability (antifouling properties) mean an effect of reducing the amount of hydrophobic substances, such as lipids, that adhere to a contact lens.
In the present description, oxygen permeability means an oxygen permeability measured according to the method described in ISO 18369-4.

<Monomer Composition For Contact Lens>

A monomer composition for a contact lens according to the present invention contains components (A) to (F) to be described later as essential components, and may further contain a component (G), a component (H), and a component (I) to be described later as optional components.
Hereinafter, the monomer composition for a contact lens according to the present invention may be simply referred to as the composition according to the present invention or the composition. A polymer for for a contact lens, which is a polymer of the monomer composition for a contact lens according to the present invention, may be simply referred to as

the polymer according to the present invention or the polymer. A contact lens containing a hydrate of the polymer for a contact lens according to the present invention may be simply referred to as the contact lens according to the present invention or the contact lens.

(A): Phosphorylcholine Group-containing Monomer

The component (A) is a phosphorylcholine group-containing monomer represented by the following formula (1).
Suitable examples include 2-(meth)acryloyloxyethyl (2-(trimethylammonio)ethyl)phosphate in which $W^1$ is O, and 2-(meth)acrylamidoethyl (2-(trimethylammonio)ethyl)phosphate in which $W^1$ is $NR^4$ and $R^4$ is H. Preferred are 2-methacryloyloxyethyl (2-(trimethylammonio)ethyl)phosphate in which $R^1$ is a methyl group and $W^1$ is O, and 2-acrylamidoethyl (2-(trimethylammonio)ethyl)phosphate in which $R^1$ is a hydrogen atom, $W^1$ is $NR^4$, and $R^4$ is H. From the viewpoint of availability, more preferred is 2-methacryloyloxyethyl (2-(trimethylammonio)ethyl)phosphate (MPC: (2-methacryloyloxyethyl)phosphorylcholine).
The component (A) can improve hydrophilicity and lubricity on a surface of the contact lens according to the present invention.

[Chem. 8]

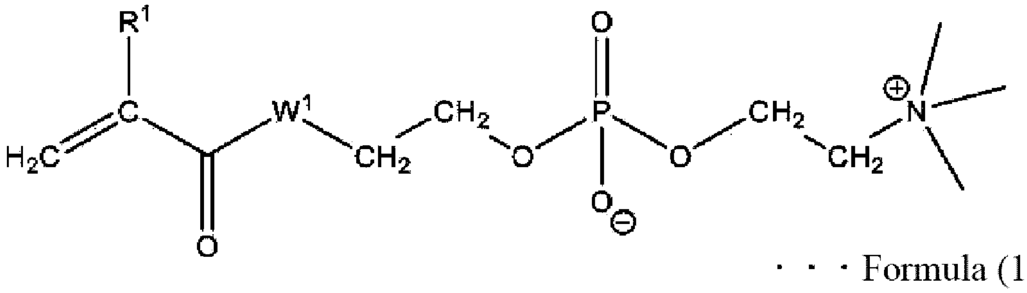

· · · Formula (1)

In the formula (1), $R^1$ is H or $CH_3$, and $W^1$ is O or $NR^4$, where $R^4$ is H or an alkyl group having 1 to 4 carbon atoms.
A content of the component (A) is 5 mass% to 25 mass%, preferably 7 mass% to 20 mass%, and more preferably 8 mass% to 18 mass%, with respect to 100 mass% as a total of the components (A) to (F) in the composition according to the present invention.
When the content is less than 5 mass%, it may be not possible to impart sufficient hydrophilicity to the surface of the contact lens. When the content is more than 25 mass%, it is difficult to dissolve the component (A) in the composition, and there is a concern that the oxygen permeability of the contact lens decreases.

(B): Phosphorylcholine Group-containing Silicone Macromer

The component (B) is a phosphorylcholine group-containing silicone macromer represented by the following formula (2), and is a component for improving the oxygen permeability, transparency, the hydrophilicity, and the lubricity of the contact lens according to the present invention.
A content of the component (B) is 10 mass% to 60 mass%, preferably 15 mass% to 55 mass%, and more preferably 20 mass% to 45 mass%, with respect to 100 mass% as the total of the components (A) to (F) in the composition according to the present invention. When the content is less than 10 mass%, there is a possibility that the transparency of the contact lens decreases, and there is a possibility that the oxygen permeability of the contact lens decreases. When the content is more than 60 mass%, there is a possibility that the composition according to the present invention has a high viscosity and is difficult to handle.

[Chem. 9]

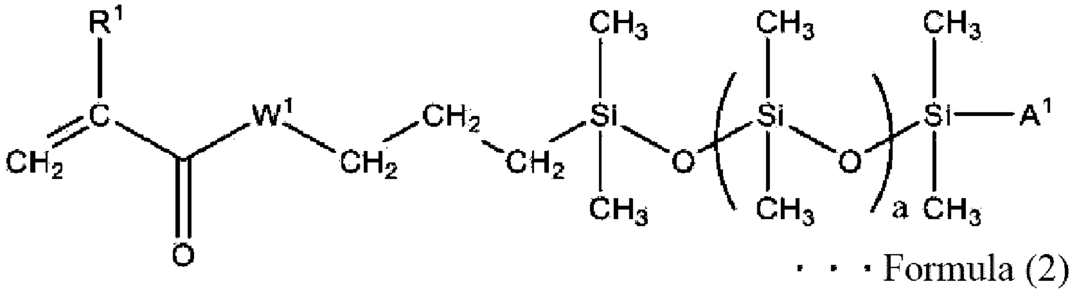

・・・Formula (2)

In the formula (2), $R^1$ is H or $CH_3$, $W^1$ is O or $NR^4$, where $R^4$ is H or an alkyl group having 1 to 4 carbon atoms, a is an integer of 1 to 100, and $A^1$ is represented by a formula (3).
a is not particularly limited as long as it is within the range of 1 to 100, and is preferably 2 to 50, more preferably 2 to 40, and still more preferably 2 to 30.

[Chem. 10]

$$—Y—Z$$ ・・・Formula (3)

In the formula (3), Y is represented by a formula (4), and Z is a phosphorylcholine group represented by a formula (6).

[Chem. 11]

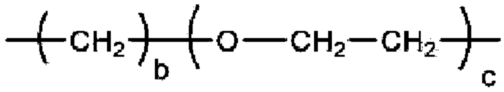

・・・Formula (4)

In the formula, b is 2 or 3, and c is 0 or 1.

[Chem. 12]

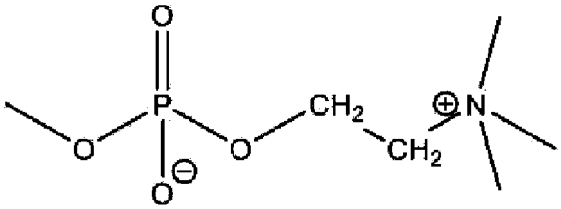

・・・Formula (6)

An example of an embodiment of (B) is a compound represented by the following formula (2-1). Note that, a is an integer of 1 to 100.

[Chem. 13]

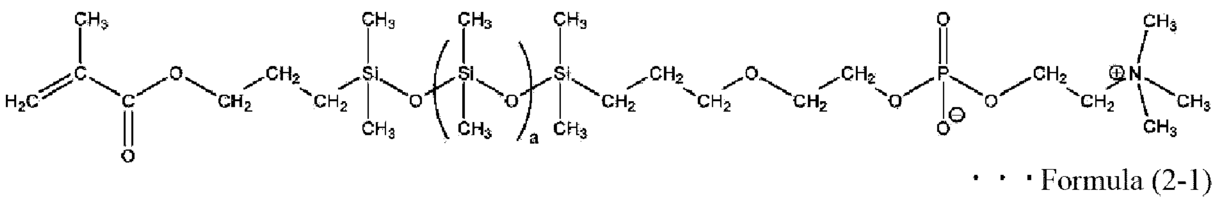

・・・Formula (2-1)

(C): Silicone Monomer or Macromer Other than Phosphorylcholine Group-containing Silicone Macromer Represented by Formula (2)

The component (C) is a silicone monomer or macromer other than the phosphorylcholine group-containing silicone macromer represented by the formula (2). The component (C) is a component for improving the oxygen permeability of the contact lens obtained from the composition according to the present invention, and may be one type or a mixture of two or more types.

A content of the component (C) is 5 mass% to 40 mass%, preferably 8 mass% to 30 mass%, and more preferably 10 mass% to 25 mass%, with respect to 100 mass% as the total of the components (A) to (F) in the composition according to the present invention. When the content is less than 5 mass%, there is a possibility that sufficient oxygen permeability cannot be obtained. When the content is more than 40 mass%, there is a possibility that the hydrophilicity of the contact lens decreases.

An example of an embodiment of the component (C) is a compound represented by the following formula (9), formula (10), formula (11), or formula (12).

[Chem. 14]

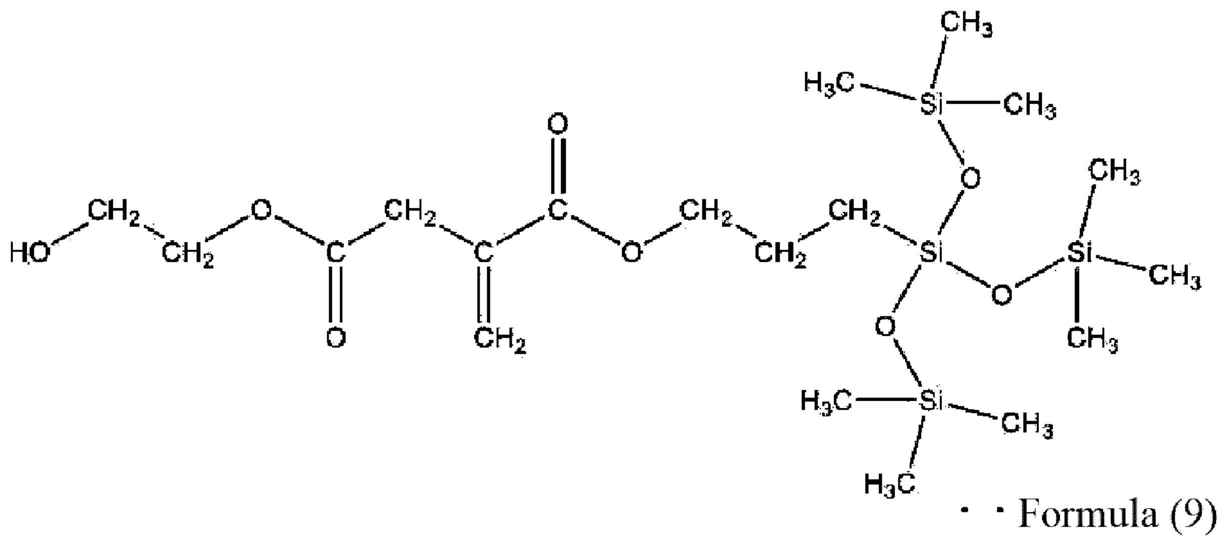

・・Formula (9)

[Chem. 15]

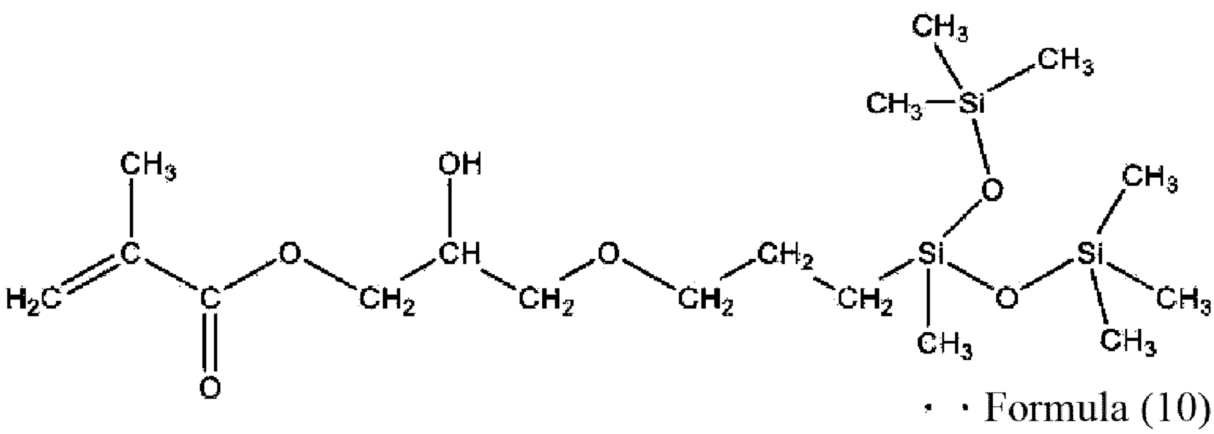

・・Formula (10)

[Chem. 16]

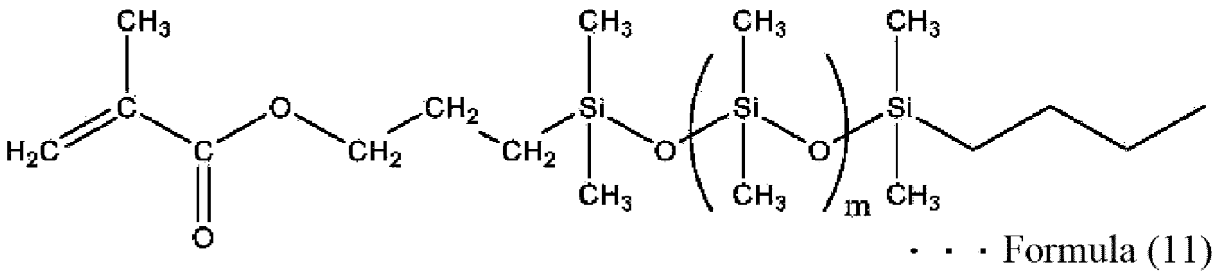

· · · Formula (11)

[Chem. 17]

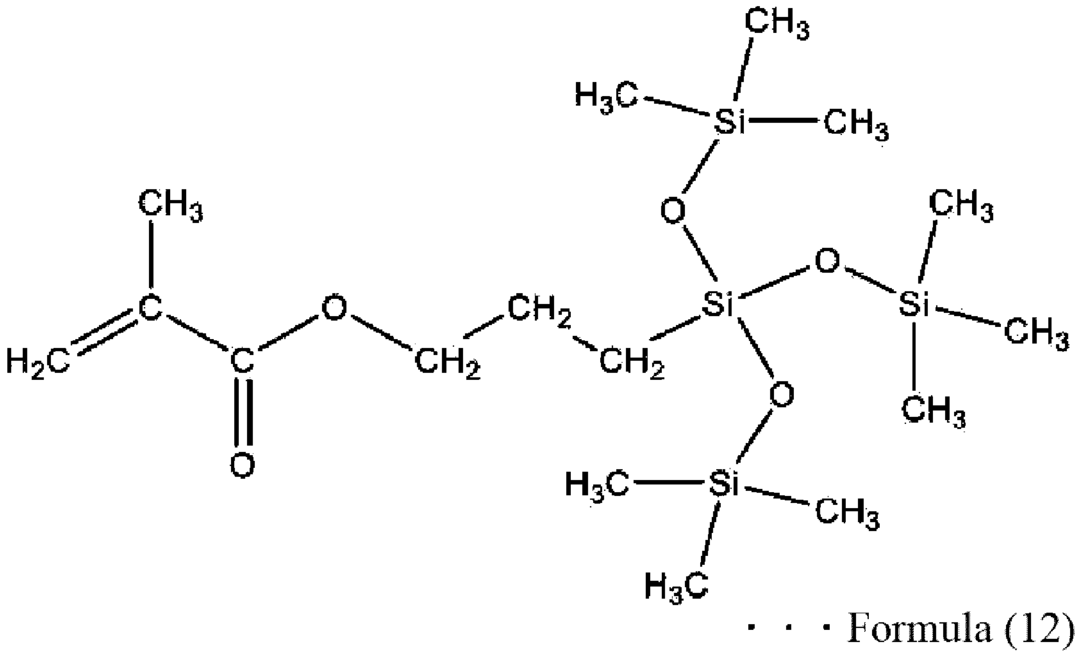

· · · Formula (12)

(D): Hydroxy Group-containing Hydrophilic Monomer

The component (D) is one or more hydroxy group-containing hydrophilic monomers selected from the group consisting of hydroxyethyl (meth)acrylate, hydroxypropyl (meth)acrylate, hydroxybutyl (meth)acrylate, hydroxyethyl (meth)acrylamide, ethylene glycol monovinyl ether, glycerol methacrylate, and diethylene glycol monovinyl ether. The component (D) is a component for improving the transparency of the composition according to the present invention and the transparency of the contact lens obtained from the composition according to the present invention, and may be any one type of these monomers or a mixture of two or more types.

Specific examples of the component (D) include 2-hydroxyethyl (meth)acrylate, 2-hydroxypropyl (meth)acrylate, 4-hydroxybutyl (meth)acrylate, 2-hydroxybutyl (meth)acrylate, 2-hydroxyethyl (meth)acrylamide, ethylene glycol monovinyl ether, and diethylene glycol monovinyl ether.

A content of the component (D) is 5 mass% to 40 mass%, preferably 10 mass% to 35 mass%, and more preferably 15 mass% to 30 mass%, with respect to 100 mass% as the total of the components (A) to (F) in the composition according to the present invention. When the content is less than 5 mass%, there is a possibility that it is difficult to dissolve the component (A) in the composition, and there is a possibility that the transparency of the contact lens decreases. When the content is more than 40 mass%, there is a possibility that sufficient oxygen permeability cannot be obtained.

(E): Amide Group-containing Hydrophilic Monomer

The component (E) is one or more amide group-containing hydrophilic monomers selected from the group consisting of N-vinylpyrrolidone (N-vinyl-2-pyrrolidone), N,N-dimethylacrylamide, N,N-diethylacrylamide, N-methyl-N-vinylacetamide, and N-vinylacetamide.

The component (E) is a component for adjusting physical properties such as a water content in the composition according to the present invention, and may be any one type of these monomers or a mixture of two or more types.
A content of the component (E) is preferably 0 mass% to 20 mass% or 0.01 mass% to 20 mass%, more preferably 18 mass% or less, and still more preferably 15 mass% or less, with respect to 100 mass% as the total of the components (A) to (F) in the composition according to the present invention. When the content is more than 20 mass%, there is a possibility that sufficient oxygen permeability is not obtained, or that the antifouling properties decrease.

(F): Crosslinking Agent

The component (F) is a crosslinking agent. It can be blended for the purpose of adjusting the physical properties of the contact lens according to the present invention.
Examples of the component (F) include crosslinking agents such as ethylene glycol dimethacrylate, diethylene glycol dimethacrylate, triethylene glycol dimethacrylate, tetraethylene glycol dimethacrylate, ethylene glycol divinyl ether, diethylene glycol divinyl ether, triethylene glycol divinyl ether, methylenebisacrylamide, trimethylolpropane tri(meth) acrylate, 2-(2-vinyloxyethoxy)ethyl (meth)acrylate, divinylbenzene, allyl (meth)acrylate, and polydimethylsiloxane dimethacrylate.
The component (F) may be any one type of these or a mixture of two or more types.
A content of the component (F) is preferably 0 mass% to 2.5 mass% or 0.005 mass% to 2.5 mass%, more preferably 0.1 mass% to 2.0 mass%, and still more preferably 0.2 mass% to 1.5 mass%, with respect to 100 mass% as the total of the components (A) to (F) in the composition according to the present invention. When the content is more than 2.5 mass%, there is a concern that the contact lens is brittle.

(G): Polymerization Initiator

The composition according to the present invention may be a composition containing (G): a polymerization initiator as an optional component. In the case where the component (G) is contained, care must be taken with regard to storage and the like of the composition according to the present invention, and there is an advantage that the polymer for a contact lens according to the present invention can be easily obtained with a stable quality by simply heating the composition according to the present invention. The component (G) is not particularly limited, and any known thermal polymerization initiator or photopolymerization initiator can be used.
Examples of the thermal polymerization initiator include: azo-based polymerization initiators such as 2,2'-azobis(isobutyronitrile), dimethyl 2,2-azobis(2-methylpropionate) 2,2'-azobis[2-(2-imidazolin-2-yl)propane]dihydrochloride, 2,2'-azobis(2,4-dimethylvaleronitrile), 2,2'-azobis[2-(2-imidazolin-2-yl)propane]disulfate dihydrate, 2,2'-azobis(2-methylpropionamidine)dihydrochloride, 2,2'-azobis[N-(2-carboxyethyl)-2-methylpropionamidine]dihydrate, 2,2'-azobis [2-(2-imidazolin-2-yl)propane], 2,2'-azobis(1-imino-1-pyrrolidino-2-methylpropane)dihydrochloride, 2,2'-azobis[2-methyl-N-{1,1-bis(hydroxymethyl)-2-hydroxyethyl}propionamide], 2,2'-azobis[2-methyl-N-(2-hydroxyethyl)propionamide], 2,2'-azobis(2-methylpropionamidine)dihydrochloride, and 2,2'-azobis[2-methyl-N-(2-hydroxyethyl)propionamide]; and peroxide-based polymerization initiators such as benzoyl peroxide, t-butyl hydroperoxide, cumene hydroperoxide, lauroyl peroxide, t-butyl peroxyhexanoate, and 3,5,5-trimethylhexanoyl peroxide.
Examples of the photopolymerization initiator include 1-hydroxycyclohexyl phenyl ketone, 2-hydroxy-2-methyl-1-phenyl-propan-1-one, bis(2,6-dimethoxybenzoyl)-2,4,4-trimethylpentylphosphine oxide, bis(2,4,6-trimethylbenzoyl)-phenylphosphine oxide, 2,4,6-trimethylbenzyldiphenylphosphine oxide, 2,4,6-trimethylbenzoyldiphenylphosphine oxide, benzoin methyl ester, camphorquinone, and ethyl-4-(N,N-dimethylamino)benzoate. In addition, examples of the photopolymerization initiator shown by trade names include Irgacure 819, Irgacure 1700, Irgacure 1800, Irgacure 819, Irgacure 1850, Darocur 1173, and Darocur 2959. The component (G) may be any one type of these photopolymerization initiators or a mixture of two or more types.
The component (G) may be any one type of these thermal polymerization initiators or a mixture of two or more types.
In the case where the component (G) is contained, a content thereof is preferably 0.01 to 3 parts by mass, and more preferably 0.1 to 2 parts by mass, with respect to 100 parts by mass as the total of the components (A) to (F) in the composition according to the present invention. When the content is less than 0.01 parts by mass, there is a concern that polymerizability of the monomers in the composition is insufficient, and that the advantages of blending the component (G) are not obtained. When the content is more than 3 parts by mass, there is a concern that reaction decomposition products of the component (G) is not sufficiently removed by extraction when the polymer for a contact lens obtained by polymerization is washed to produce the contact lens.

(H): Monomer Other than (A) to (F)

The component (H) is a monomer other than (A) to (F). The component (H) is an optional component, and can be blended for the purpose of adjusting the physical properties of the contact lens according to the present invention.
Examples of the component (H) include hydrophilic monomers such as N-vinylpiperidin-2-one, N-vinyl-ε-caprolactam, N-vinyl-3-methyl-2-caprolactam, acrylamide, N-isopropylacrylamide, acryloylmorpholine, N-vinylformamide, (meth)acrylic acid, 2-methacryloyloxyethyl succinate, methoxypolyethylene glycol methacrylate, and methoxyethyl (meth)acrylate, and hydrophobic monomers such as methyl (meth)acrylate, ethyl (meth)acrylate, butyl (meth)acrylate, and isobornyl (meth)acrylate.
The component (H) may be any one type of these or a mixture of two or more types.
In the case where the component (H) is contained, it is preferably 20 parts by mass or less, more preferably 18 parts by mass or less, and still more preferably 15 parts by mass or less, with respect to 100 parts by mass as the total of the components (A) to (F) in the composition according to the present invention. When the content of the component (H) is more than 20 parts by mass, there is a concern that the transparency and durability of the contact lens decrease.

(I): Solvent

The component (I) is a solvent having a hydroxy group. The component (I) is an optional component, and may be added for the purpose of improving solubility of the component (A) in the composition according to the present invention. Specifically, the blending of the component (I) has the advantage of increasing a dissolution rate of the component (A) in the composition according to the present invention, facilitating the dissolution.
Examples of the component (I) include ethanol, 1-propanol, 2-propanol, 1-butanol, 2-butanol, tert-butanol, 1-pentanol, 2-pentanol, tert-amyl alcohol, 1-hexanol, 1-octanol, 1-decanol, 1-dodecanol, glycolic acid, lactic acid, ethylene glycol, propylene glycol, and butylene glycol. The component (I) may be any one type of these solvents or a mixture of two or more types. Preferred are ethanol, 1-propanol, 2-propanol, 1-hexanol, and propylene glycol.
In the case where the component (I) is contained, a content thereof is not particularly limited, and is preferably 20 parts by mass or less, more preferably 15 parts by mass or less, and still more preferably 10 parts by mass or less, with respect to 100 parts by mass as the total of the components (A) to (F) in the composition according to the present invention. It is particularly preferred not to blend a solvent.

(Other Components)

The composition according to the present invention may further contain components other than the above components in a range that the object of the present invention is not impaired. Examples of other components include a polymerizable ultraviolet absorber and a polymerizable dye as a colorant. When an ultraviolet absorber is blended, the contact lens according to the present invention can have reduced burden on the eyes caused by ultraviolet light from sunlight and the like. In addition, when a dye is blended, the contact lens according to the present invention can be a colored contact lens.
A content of the other components in the composition according to the present invention is preferably 7 parts by mass or less, more preferably 5 parts by mass or less, and still more preferably 3 parts by mass or less, with respect to 100 parts by mass as a total of the components (A) to (I) in the composition according to the present invention.

(Properties of Composition According to Present Invention)

The composition according to the present invention (particularly, the monomer composition for a contact lens containing (A) to (F) and further the component (H)) has a proportion of a phosphorylcholine group of 10 mass% or more and a proportion of silicon of 10% or more. As is clear from Table 1 below, within these ranges, the effects of the present invention can be achieved.

<Method for Producing Composition According to Present Invention>

A method for producing the composition according to the present invention is not particularly limited, and the composition can be produced by charging respective components in any order or all at once to a stirring (mixing) device and stirring and mixing the components at 40°C or lower until uniform. However, in the case of containing the component (G), in order to avoid initiation of a polymerization reaction during mixing, when the component (G) is a thermal polymerization initiator, it is preferable to mix the components at a temperature of 40°C or lower and 10°C or more lower than the 10-hour half-life temperature of the initiator, and when the component (G) is a photopolymerization initiator, it is preferable to mix the components in a light-shielded state.

<Method for Producing Polymer According to Present Invention>

An embodiment of a method for producing the polymer according to the present invention will be described. Note that, the production method described below is one embodiment for obtaining the polymer according to the present invention, and the polymer according to the present invention is not limited to the polymer obtained by this production method.

The polymer can be produced by using a mold (metal mold) having a hydrophobic surface made of a polypropylene or the like, filling the mold with the composition according to the present invention, and performing polymerization. In the case of a composition containing no component (G), a polymerization initiator similar to the component (G) is added to the composition in an amount similar to that of the component (G), and the composition is dissolved to fill the mold.

In the case of polymerization using a thermal polymerization initiator, the polymerization is carried out for 1 hour or longer at a temperature between 45°C and 140°C, which is appropriate for the contained thermal polymerization initiator.

In the case of polymerization using a photopolymerization initiator, the polymerization is carried out for 5 minutes or longer by irradiation with ultraviolet light having a wavelength suitable for the contained photopolymerization initiator at an irradiance of 0.3 $mW/cm^2$ or more. After the polymerization is completed, the produced polymer is taken out from the mold.

A polymerization atmosphere is not particularly limited, and an inert gas atmosphere such as nitrogen or argon is preferred in terms of improving a polymerization rate. Examples of a method of using the inert gas atmosphere include aeration of the composition with the inert gas, placing a site of filling the mold with the composition in the inert gas atmosphere, and carrying out polymerization in the inert gas atmosphere.

A pressure inside the mold may be an atmospheric pressure to a slight pressure, and in the case of polymerization in an inert gas atmosphere, a gauge pressure is preferably 1 $kgf/cm^2$ or less.

<Method for Producing Contact Lens According to Present Invention>

An embodiment of a method for producing the contact lens according to the present invention will be described. Note that, the production method described below is one embodiment for obtaining the contact lens according to the present invention, and the contact lens according to the present invention is not limited to the contact lens obtained by this production method.

The contact lens according to the present invention is preferably a silicone hydrogel contact lens, which is a hydrate of the polymer according to the present invention. Here, the "hydrate" means that water is contained, and the contact lens according to the present invention (the silicone hydrogel contact lens according to the present invention) is one in which the polymer contains water and is in a hydrogel form.

A water content of the contact lens according to the present invention (a proportion of water to a total mass of the contact lens) is preferably 35% or more and 60% or less, and more preferably 40% or more and 55% or less. When the water content is less than 35%, there is a concern that the lens is hard, and when it is more than 60%, there is a concern that the oxygen permeability decreases.

In the present description, the "silicone hydrogel" refers to a hydrogel having a silicone moiety (siloxane bond) in the polymer. Since the composition according to the present invention contains the components (B) and (C), the polymer of the composition has a silicone moiety therein and forms a silicone hydrogel upon hydration (by containing water).

Since the polymer according to the present invention may contain unreacted substances, by-products, and the (I) solvent as an optional component, the polymer may be purified by washing or the like before hydration.

One of washing methods is washing using a solvent. As the solvent, for example, water, methanol, ethanol, 1-propanol, 2-propanol, ethylene glycol, propylene glycol, butylene glycol, or a mixture thereof can be used. The washing can be carried out, for example, by immersing the polymer according to the present invention in the above solvent at 10°C to 40°C for 10 minutes to 5 hours, and then immersing the polymer in water for 10 minutes to 5 hours. In addition, between the washing using a solvent and the washing using water, washing by immersing the polymer in an aqueous solution having a solvent concentration of 20 mass% to 50 mass% for 10 minutes to 5 hours may be added, or these washing steps may be carried out a plurality of times. As the water, purified water such as distilled water, ion exchange water, and RO water, water for injection, and the like are preferred.

The polymer according to the present invention purified by washing can be immersed in physiological saline and hydrated to obtain a contact lens. As the physiological saline, borate buffered physiological saline or phosphate buffered physiological saline may be used. Since the physiological saline is used in a solution for storing soft contact lenses, the polymer may be immersed in the solution for storing soft contact lenses to be hydrated. The physiological saline preferably has an osmolarity of 250 mOsm/kg to 400 mOsm/kg.

<Properties of Contact Lens According to Present Invention>

The contact lens according to the present invention preferably has an oxygen permeability Dk of $50 \times 10^{-11}$ $(cm^2/sec)\cdot(mLO_2/mL \times mmHg)$ or more. As is clear from Table 1 below, within these ranges, the effects of the present invention can be achieved.

In the contact lens according to the present invention, "very good hydrophilicity" means, although there is no particular limitation on the numerical value, a water film break up time (WBUT) of preferably 10 seconds or longer in evaluation described in detail in Examples.

A "very good water content" means, although there is no particular limitation on the numerical value, a water content of preferably 40% or more to 55% or less in evaluation described in detail in Examples.

"Very good oxygen permeability" and "good oxygen permeability" mean, although there is no particular limitation on the numerical value, preferably an oxygen permeability of "70 or more" and "50 or more to less than 70", respectively, in oxygen permeability measurement described in detail in Examples.

"Very good coatability" and "good coatability" mean, although there is no particular limitation on the numerical value, preferably antifouling properties of "less than 0.05" and "0.05 or more to less than 0.10", respectively, in evaluation described in detail in Examples.

EXAMPLES

Hereinafter, the present invention will be described in more detail with reference to Examples and Comparative Examples, but the present invention is not limited thereto. First, components of compositions used in Examples and Comparative Examples are shown below.

(A): Phosphorylcholine Group-containing Monomer
MPC: (2-methacryloyloxyethyl)phosphorylcholine
(B): Phosphorylcholine Group-containing Silicone Macromer

· SiPC1: compound represented by formula (2-1) {a = 6}
· SiPC2: compound represented by formula (2-1) {a = 19}
· SiPC3: compound represented by formula (2-1) {a = 34}

(C): Silicone Monomer

· ETS: compound represented by formula (9)
· SiGMA: compound represented by formula (10)
· MCR-M11: compound represented by formula (11)
· TRIS: compound represented by formula (12)

(D): Hydroxy Group-containing Hydrophilic Monomer

· HEMA: 2-hydroxyethyl methacrylate
· HBMA: 2-hydroxybutyl methacrylate

(E): Amide Group-containing Hydrophilic Monomer

· NVP: N-vinylpyrrolidone

(F): Crosslinking Agent

· TEGDMA: tetraethylene glycol dimethacrylate
· TMPTMA: trimethylolpropane trimethacrylate

(G): Polymerization Initiator

· AIBN: 2,2'-azobis(isobutyronitrile)
· I-819: bis(2,4,6-trimethylbenzoyl)-phenylphosphine oxide (I): Solvent
· EtOH: ethanol
· NPA: 1-propanol (normal propanol)

[Synthesis Example 1-1] Synthesis of Intermediate Compound Represented by Formula (2-B) {a: 6}

In 43.6 g of tetrahydrofuran, 10.8 g (49.4 mmol) of 3-(chlorodimethylsilyl)propyl methacrylate was dissolved, and 2.36 g (98.5 mmol) of lithium hydroxide was added thereto. After 30 minutes, 43.6 g of heptane was added and pressure filtration was carried out to remove insoluble matters. (With this reaction, a silanol group-containing compound having a vinyl group was obtained.)

To the filtrate from the pressure filtration, 71.2 g of tetrahydrofuran was added, and then 22.0 g (98.8 mmol) of hexamethylcyclotrisiloxane was added. Subsequently, the entire amount of a catalyst solution (prepared in a separate flask by dissolving 0.74 g of diazabicycloundecene in 7.52 g of tetrahydrofuran) was added. After 4 hours, 6.60 g of triethylamine was added, and 5.14 g of chlorodimethylsilane was added to stop the reaction.

After the reaction, the solution was concentrated using an evaporator, diluted with heptane, and then washed with ion exchange water. The heptane layer was collected, dehydrated using sodium sulfate, and finally concentrated using an evaporator to obtain 26.2 g of an intermediate compound represented by a formula (2-B) {a: 6}.

[Chem. 18]

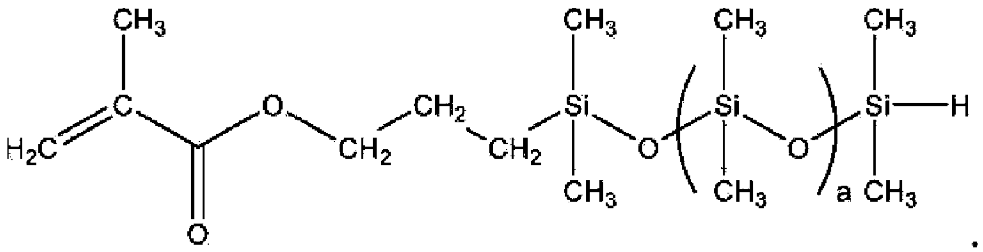

・・・ (2-B)

[Synthesis Example 1-2] Synthesis of Intermediate Compound Represented by Formula (2-B) {a: 19}

An intermediate compound represented by the formula (2-B) {a: 19} was obtained in the same manner as in Synthesis Example 1-1 while changing the amount of hexamethylcyclotrisiloxane charged.

[Synthesis Example 1-3] Synthesis of Intermediate Compound Represented by Formula (2-B) {a: 34}

An intermediate compound represented by the formula (2-B) {a: 34} was obtained in the same manner as in Synthesis Example 1-1 while changing the amount of hexamethylcyclotrisiloxane charged.

[Synthesis Example 2-1] Synthesis of Compound Represented by Formula (2-1) {a: 6}

In 5.40 g of 2-propanol and 3.00 g of heptane, 3.00 g of the compound represented by the formula (2-B) {a: 6} obtained in Synthesis Example 1-1 and 1.36 g of 2-(2-propenyloxy)ethyl-2-(trimethylammonio)ethyl phosphate (obtained by the synthesis method described in WO2019/194264) were dissolved, then 55 μL of hexachloroplatinic acid hexahydrate (manufactured by Tokyo Chemical Industry Co., Ltd.) adjusted to a 4 wt% 2-propanol solution was added thereto, and a hydrosilylation reaction was carried out at 75°C for 4 hours. 0.01 g of activated carbon was added, the mixture was stirred for 30 minutes, and the activated carbon was removed by pressure filtration.

18.0 g of ion exchange water, 6.00 g of ethanol, 24.0 g of ethyl acetate, and 12.0 g of heptane were mixed and stirred. After standing, the mixture separated into two layers, and the lower layer was discarded. Thereafter, the mixture was further purified with ion exchange water and ethyl acetate, and then concentrated using an evaporator to obtain 5.0 g of a transparent viscous substance.

$^1$H NMR analysis indicates that the compound is of the formula (2-1) {a: 6}.

The assignment results in $^1$H NMR analysis for Synthesis Example 2-1 are shown below.

$^1$H NMR (DMSO-d6): $\delta$ = 0.0 ppm (Si-$CH_3$), 0.5 ppm (Si-$CH_2$-), 1.5 to 1.8 ppm (-$CH_2$-$CH_2$-$CH_2$-), 1.9 ppm (-C-$CH_3$), 3.2 ppm (N-$CH_3$), 3.3 to 3.8 ppm (O-$CH_2$-, N-$CH_2$-), 4.0 to 4.5 ppm (C(=O)-O-$CH_2$-, -P-O-$CH_2$-), 5.6 ppm, 6.1 ppm ($CH_2$=C-)

[Synthesis Example 2-2] Synthesis of Compound Represented by Formula (2-1) {a: 19}

The synthesis was carried out in the same manner as in Synthesis Example 2-1, except that the intermediate compound represented by the formula (2-B) {a: 19} obtained in Synthesis Example 1-2 was used.

$^1$H NMR analysis indicates that the compound is of the formula (2-1) {a: 19}.

The assignment results in $^{1}$H NMR analysis for Synthesis Example 2-2 are shown below.

$^{1}$H NMR (DMSO-d6): $\delta$ = 0.0 ppm (Si-$CH_3$), 0.5 ppm (Si-$CH_2$-), 1.5 to 1.8 ppm (-$CH_2$-$CH_2$-$CH_2$-), 1.9 ppm (-C-$CH_3$), 3.2 ppm (N-$CH_3$), 3.3 to 3.8 ppm (O-$CH_2$-, N-$CH_2$-), 4.0 to 4.5 ppm (C(=O)-O-$CH_2$-, -P-O-$CH_2$-), 5.6 ppm, 6.1 ppm ($CH_2$=C-)

[Synthesis Example 2-3] Synthesis of Compound Represented by Formula (2-1) {a: 34}

The synthesis was carried out in the same manner as in Synthesis Example 2-1, except that the intermediate compound represented by the formula (2-B) {a: 34} obtained in Synthesis Example 1-3 was used.

The assignment results in $^{1}$H NMR analysis for Synthesis Example 2-3 are shown below.

$^{1}$H NMR (DMSO-d6): $\delta$ = 0.0 ppm (Si-$CH_3$), 0.5 ppm (Si-$CH_2$-), 1.5 to 1.8 ppm (-$CH_2$-$CH_2$-$CH_2$-), 1.9 ppm (-C-$CH_3$), 3.2 ppm (N-$CH_3$), 3.3 to 3.8 ppm (O-$CH_2$-, N-$CH_2$-), 4.0 to 4.5 ppm (C(=O)-O-$CH_2$-, -P-O-$CH_2$-), 5.6 ppm, 6.1 ppm ($CH_2$=C-)

<Evaluation Methods>

Each evaluation item will be described. The compositions, polymers, and contact lenses in Comparative Examples, which are outside the scope of the present invention, are also simply referred to as compositions, polymers, and contact lenses, as in Examples.

[a. Transparency of Composition]

The transparency was evaluated by visual observation according to the following criteria. A smaller score indicates better transparency.

Transparent: score [0]
Semi-transparent: score [1]
Cloudy: score [2]

[b. Transparency of Contact Lens]

The contact lens according to the present invention was prepared to have a thickness of 100 $\pm$ 30 $\mu$m, and the transparency was evaluated by visual observation according to the following criteria. A smaller score indicates better transparency.

Transparent: score [0]
Semi-transparent: score [1]
Cloudy: score [2]

[c. WBUT]

Wettability of the contact lens was evaluated using a water film break up time (WBUT). Using tweezers or the like, the contact lens was slowly taken out from the physiological saline, and a time until the water film was broken was measured. This time was defined as WBUT and was evaluated according to the following criteria. A smaller score indicates better wettability (hydrophilicity) of the contact lens.

10 seconds or longer: score [0]
5 seconds or longer and shorter than 10 seconds: score [1]
Shorter than 5 seconds: score [2]

[d. Water Content]

The water content of the contact lens was measured by the method described in ISO-18369-4 and evaluated according to the following criteria. A smaller score indicates a better water content.

40% or more and 55% or less: score [0]
30% or more and less than 40%, or more than 55% and 60% or less: score [1]
Less than 30% or more than 60%: score [2]

[e. Oxygen Permeability]

The oxygen permeability of the contact lens was measured according to the method described in ISO 18369-4, and evaluated according to the following criteria.

A smaller score indicates a better oxygen permeability. Specifically, the oxygen permeability was measured according to the polarographic measurement method described in ISO 18369-4. For the measurement, O2 Permeometer Model 201T manufactured by Rehder Development Company was used. A lens thickness was plotted on an x axis and a reciprocal of a measured current value on a y axis, and the oxygen permeability was calculated based on a reciprocal of a slope of a regression line. Note that, the unit of the oxygen permeability (barrer) is $\times 10^{-11}$ ($cm^2$/sec)·($mLO_2$/mL $\times$ mmHg).

70 or more: score [0]
50 or more and less than 70: score [1]
Less than 50: score [2]

[f. Antifouling Properties]

As evaluation of the antifouling properties, the coatability was evaluated according to the following procedure.

◦ Coatability evaluation method

Sudan Black B (0.05 g) was dissolved in 10 g of tocopherol, and 40 g of liquid paraffin was added thereto and mixed uniformly. This was used as a dyeing solution. An evaluation lens was taken out from a glass vial, the moisture on the lens surface was wiped off, and the lens was immersed in 1 mL of the dyeing solution for 5 minutes. The contact lens was taken out and the excess dyeing solution was removed with physiological saline and a normal cloth moistened with physiological saline. The contact lens dyed with the dyeing solution was immersed in 1.5 mL of physiological saline, and an absorbance at 600 nm was measured. The absorbance of the contact lens before dyeing was defined as $A_0$, and the absorbance of the contact lens after dyeing was defined as $A_1$.

An increase in absorbance due to dyeing was calculated according to the following equation (A), and the coatability was evaluated by scoring based on the following criteria.

Sudan Black B is hydrophobic and adsorbs to hydrophobic substances, and is therefore easily adsorbed to the hydrophobic lens surface or hydrophobic spot. Therefore, a smaller absorbance, that is, a smaller score, indicates that the lens surface is coated with a hydrophilic polymer and has better coatability.

$$\text{Absorbance} = A_1 - A_0 \qquad \text{Equation (A)}$$

Less than 0.05: score [0]
0.05 or more and less than 0.10: score [1]
0.10 or more and less than 0.20: score [2]
0.20 or more: score [3]

[Example 1]

In a container, 0.50 g (10.0 mass%) of MPC, 2.00 g (40.0 mass%) of the compound in Synthesis Example 2-1, 1.00 g (20.0 mass%) of SiGMA, and 1.10 g (22.0 parts by mass) of HBMA were mixed and stirred at room temperature until the MPC was dissolved. Further, 0.375 g (7.0 mass%) of NVP, 0.025 g (1.0 mass%) of TEGDMA, and 0.025 g (0.5 parts by mass) of AIBN were added to the container, and the mixture was stirred at room temperature until uniform, to obtain a composition.

A cell measuring 25 mm $\times$ 70 mm $\times$ 0.1 mm was filled with the composition, the cell being sandwiched between two polypropylene plates using a 0.1 mm thick polyethylene terephthalate sheet as a spacer. A lens mold filled with the composition was charged into an oven, and the atmosphere inside the oven was substituted with nitrogen. Next, the temperature inside the oven was raised to 80°C and maintained at 80°C for 12 hours to polymerize the composition and prepare a polymer. The polymer was taken out from the lens mold to obtain a polymer having a contact lens shape. The polymer was immersed in 100 mL of a 50 mass% 2-propanol aqueous solution for 4 hours, and then immersed in 100 mL of ion exchange water for 4 hours to remove unreacted substances and the like, thereby purifying the polymer. The purified polymer was immersed in physiological saline according to ISO-18369-3 and allowed to swell (hydrate) to prepare a silicone hydrogel contact lens. The contact lens was divided into sizes and shapes suitable for each of the above

evaluations, and each evaluation was carried out. The blending proportion of each component in the composition, the polymerization conditions, and the evaluation results are shown in Table 1.

[Examples 2 to 4]

Silicone hydrogel contact lenses were prepared in the same manner as in Example 1, except that the blending proportions of the components in the composition and the polymerization conditions were as shown in Table 1. The contact lenses in Examples were evaluated in the same manner as in Example 1. The results are shown in Table 1.
Note that, regarding Example 4, the composition was polymerized by irradiation with UV light for 30 minutes at room temperature with a UV-LED irradiator (irradiation light wavelength: 405 nm) at an irradiance of 1.5 mW/cm$^2$ to obtain a polymer.

[Comparative Examples 1 to 4]

Operations were carried out in the same manner as in Example 1, except that the blending proportions of the components in the composition and the polymerization conditions were as shown in Table 2. The contact lenses in Comparative Examples were evaluated in the same manner as in Example 1. The blending proportion of each component in the composition, the polymerization conditions, and the evaluation results are shown in Table 2.
Comparative Example 1 is different from Examples in that it does not contain a phosphorylcholine group-containing silicone macromer and has a high content of an amide group-containing hydrophilic monomer. Note that, since the transparency of the composition was evaluated as "2", no polymer was prepared subsequently.
Comparative Example 2 is different from Examples in that it does not contain a phosphorylcholine group-containing silicone macromer. Note that, since the transparency of the polymer was evaluated as "2", subsequent evaluations of WBUT or the like were not carried out.
Comparative Example 3 is different from Examples in that the content of the phosphorylcholine group-containing silicone macromer is low.

[Table 1]

| Example | | Example 1 | Example 2 | Example 3 | Example 4 |
|---|---|---|---|---|---|
| A | MPC | 10.0 | 12.0 | 13.0 | 10.0 |
| B | SiPC1 (a = 6) | 40.0 | 0.0 | 0.0 | 40.0 |
| | SiPC2 (a = 19) | 0.0 | 40.0 | 0.0 | 0.0 |
| | SiPC3 (a = 34) | 0.0 | 0.0 | 36.0 | 0.0 |
| C | MCR-M11 | 0.0 | 0.0 | 0.0 | 0.0 |
| | TRIS | 0.0 | 0.0 | 0.0 | 0.0 |
| | ETS | 0.0 | 0.0 | 0.0 | 15.0 |
| | SiGMA | 20.0 | 20.0 | 20.0 | 0.0 |
| D | HEMA | 0.0 | 0.0 | 22.0 | 0.0 |
| | HBMA | 22.0 | 22.0 | 0.0 | 23.0 |
| E | NVP | 7.0 | 5.0 | 8.0 | 11.3 |
| F | TEGDMA | 1.0 | 1.0 | 1.0 | 0.0 |
| | TMPTMA | 0.0 | 0.0 | 0.0 | 0.7 |
| Total of A to F (mass%) | | 100.0 | 100.0 | 100.0 | 100.0 |
| G | AIBN | 0.5 | 0.5 | 0.5 | 0.0 |
| | 1-189 | 0.0 | 0.0 | 0.0 | 0.5 |
| I | EtOH | 0.0 | 0.0 | 0.0 | 0.0 |
| | NPA | 0.0 | 0.0 | 10.0 | 20.0 |
| Total of A to H (part by mass) | | 100.5 | 100.5 | 110.5 | 120.5 |

(continued)

| Example | | Example 1 | Example 2 | Example 3 | Example 4 |
|---|---|---|---|---|---|
| Polymerization condition | Method | Thermal poly-merization | Thermal poly-merization | Thermal poly-merization | Photopolymeriz ation |
| | Temperature | 80 | 80 | 80 | r.t. |
| | Irradiance ($mW/cm^2$) | - | - | - | 1.5 |
| | Time (hrs) | 12 | 12 | 12 | 0.5 |
| Evaluation score | Transparency of composition | 0 | 0 | 0 | 0 |
| | Transparency of contact lens | 0 | 0 | 0 | 0 |
| | WBUT (s) | 0 (> 10) | 0 (> 10) | 0 (> 10) | 0 (> 10) |
| | Water content (%) | 0 (48%) | 0 (43%) | 0 (42%) | 0 (47%) |
| | Oxygen permeability × 10-11 ($cm^2$/sec)/($mLO_2$/(mL × mmHg)) | 0 (71) | 0 (80) | 0 (82) | 1 (65) |
| | Antifouling properties | 0 | 0 | 1 | 0 |
| Proportion of phosphorylcholine group | | 14.1 | 11.3 | 10.2 | 14.1 |
| Proportion of silicon | | 12.6 | 15.9 | 15.8 | 11.9 |

[Table 2]

| Comparative Example | | Comparative Example 1 | Comparative Example 2 | Comparative Example 3 |
|---|---|---|---|---|
| A | MPC | 10.0 | 10.0 | 5.0 |
| B | SiPC1 (a = 6) | 0.0 | 0.0 | 5.0 |
| | SiPC2 (a = 19) | 0.0 | 0.0 | 0.0 |
| | SiPC3 (a = 34) | 0.0 | 0.0 | 0.0 |
| C | MCR-M11 | 40.0 | 40.0 | 0.0 |
| | TRIS | 15.0 | 15.0 | 50.0 |
| | ETS | 0.0 | 0.0 | 0.0 |
| | SiGMA | 0.0 | 0.0 | 0.0 |
| D | HEMA | 0.0 | 0.0 | 22.0 |
| | HBMA | 9.3 | 23.0 | 0.0 |
| E | NVP | 25.0 | 11.3 | 17.0 |
| F | TEGDMA | 0.0 | 0.0 | 1.0 |
| | TMPTMA | 0.7 | 0.7 | 0.0 |
| Total of A to F (mass%) | | 100.0 | 100.0 | 100.0 |
| G | AIBN | 0.5 | 0.5 | 0.5 |
| | 1-189 | 0.0 | 0.0 | 0.0 |
| I | EtOH | 0.0 | 0.0 | 0.0 |
| | NPA | 20.0 | 20.0 | 20.0 |
| Total of A to H (part by mass) | | 120.5 | 120.5 | 120.5 |

(continued)

| Comparative Example | | Comparative Example 1 | Comparative Example 2 | Comparative Example 3 |
|---|---|---|---|---|
| Polymerization condition | Method | - | Thermal polymerization | Thermal polymerization |
| | Temperature | - | 80 | 80 |
| | Irradiance ($mW/cm^2$) | - | - | - |
| | Time (hrs) | - | 12 | 12 |
| Evaluation score | Transparency of composition | 2 | 0 | 0 |
| | Transparency of contact lens | - | 2 | 0 |
| | WBUT (s) | - | - | 3 (3) |
| | Water content (%) | - | - | 0 (43%) |
| | Oxygen permeability $\times 10^{-11}$ ($cm^2$/sec)/($mLO_2$/(mL $\times$ mmHg)) | | | 0 (80) |
| | Antifouling properties | - | - | 2 |
| Proportion of phosphorylcholine group | | 6.2 | 6.2 | 4.1 |
| Proportion of silicon | | 16.1 | 16.1 | 14.3 |

[Evaluation of Examples]

The evaluation results in Table 1 will be descried below.

All of Examples 1 to 4 are given a score of "0" in the evaluation of composition uniformity and a score of "0" in the evaluation of the transparency of the polymerized product, indicating that the composition and the polymerized product according to the present invention exhibit very good compatibility with a hydrophilic monomer or a hydrophilic polymer.

All of Examples 1 to 4 are given a score of "0" in the evaluation of the wettability (hydrophilicity), indicating that the contact lens according to the present invention exhibits very good hydrophilicity.

All of Examples 1 to 4 are given a score of "0" in the evaluation of the water content, indicating that the contact lens according to the present invention exhibits a very good water content.

All of Examples 1 to 3 are given a score of "0" and Example 4 is given a score of "1" for the oxygen permeability. The contact lens according to the present invention exhibits very good or good oxygen permeability.

All of Examples 1, 2, and 4 are given a score of "0" and Example 3 is given a score of "1" in the evaluation of the antifouling properties. The contact lens according to the present invention exhibits very good or good antifouling properties (coatability).

As seen from the above results, the contact lens according to the present invention simultaneously exhibits very good hydrophilicity, a very good water content, very good or good oxygen permeability, and very good or good antifouling properties (coatability) without a surface treatment, and can thus provide a wearer with excellent comfort in wearing.

[Evaluation of Comparative Examples]

Comparative Example 3 is given a score of "3" in the evaluation of the wettability (hydrophilicity) and a score of "2" in the evaluation of the antifouling properties (coatability), indicating that the contact lens in Comparative Example 3 does not exhibit hydrophilicity and antifouling properties (coatability).

INDUSTRIAL APPLICABILITY

The present invention can provide a monomer composition for a contact lens and a contact lens obtained from the composition that can simultaneously exhibit very good surface hydrophilicity, a very good water content, good coatability, and good oxygen permeability.

Although the present invention has been described in detail and with reference to specific embodiments, it will be apparent to those skilled in the art that various changes and modifications can be made without departing from the spirit and scope of the present invention.

The present application is based on a Japanese patent application (Japanese Patent Application No.

2022-146674) filed on September 15, 2022, the contents of which are incorporated herein by reference.

**Claims**

1. A monomer composition for a contact lens comprising:

(A) a phosphorylcholine group-containing monomer represented by the following formula (1);
(B) a phosphorylcholine group-containing silicone macromer represented by the following formula (2);
(C) a silicone monomer or macromer other than the phosphorylcholine group-containing silicone macromer represented by the following formula (2);
(D) one or more hydroxy group-containing hydrophilic monomers selected from the group consisting of hydroxyethyl (meth)acrylate, hydroxypropyl (meth)acrylate, hydroxybutyl (meth)acrylate, hydroxyethyl (meth)acrylamide, ethylene glycol monovinyl ether, glycerol methacrylate, and diethylene glycol monovinyl ether;
(E) one or more amide group-containing hydrophilic monomers selected from the group consisting of N-vinyl-2-pyrrolidone, N,N-dimethylacrylamide, N,N-diethylacrylamide, N-methyl-N-vinylacetamide, and N-vinylacetamide; and
(F) a crosslinking agent, wherein

a content of the component (A) is 5 mass% to 25 mass%, a content of the component (B) is 10 mass% to 60 mass%, a content of the component (C) is 5 mass% to 40 mass%, a content of the component (D) is 5 mass% to 40 mass%, a content of the component (E) is 0 mass% to 20 mass%, and a content of the component (F) is 0 mass% to 2.5 mass%, with respect to 100 mass% as a total of the components (A) to (F) in the composition.

[Chem. 1]

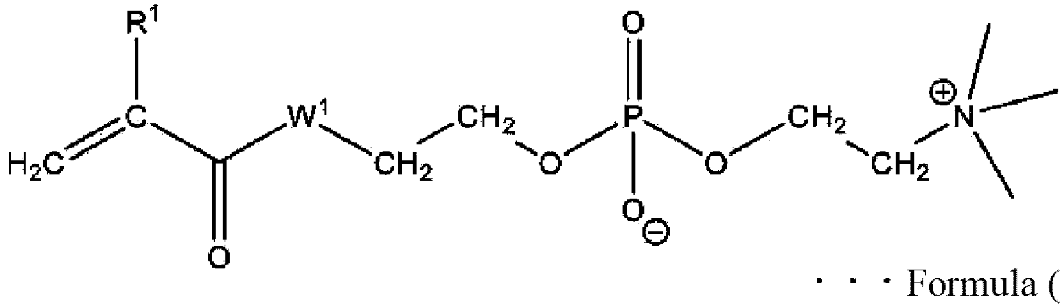

· · · Formula (1)

[in the formula (1), $R^1$ is H or $CH_3$, and $W^1$ is O or $NR^4$, where $R^4$ is H or an alkyl group having 1 to 4 carbon atoms],

[Chem. 2]

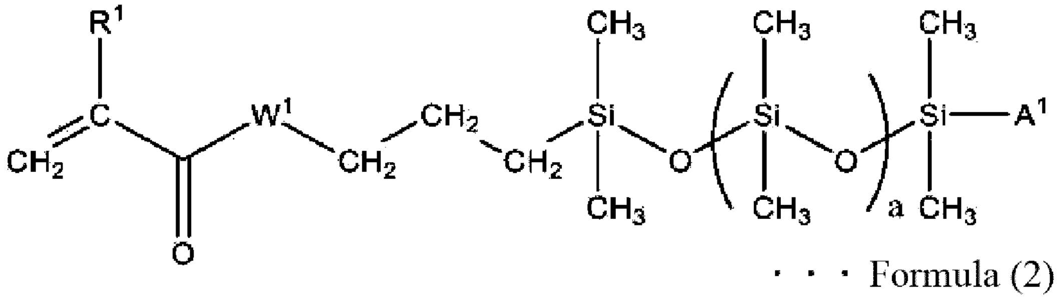

· · · Formula (2)

[in the formula (2), $R^1$ is H or $CH_3$, $W^1$ is O or $NR^4$, where $R^4$ is H or an alkyl group having 1 to 4 carbon atoms, a is an integer of 1 to 100, and $A^1$ is represented by a formula (3)],

[Chem. 3]

$$-Y-Z \quad \cdots \text{Formula (3)}$$

[in the formula (3), Y is represented by a formula (4), and Z is a phosphorylcholine group represented by a formula (6)],

[Chem. 4]

$$-(CH_2)_b-(O-CH_2-CH_2)_c- \quad \cdots \text{Formula (4)}$$

[in the formula, b is 2 or 3, and c is 0 or 1],

[Chem. 5]

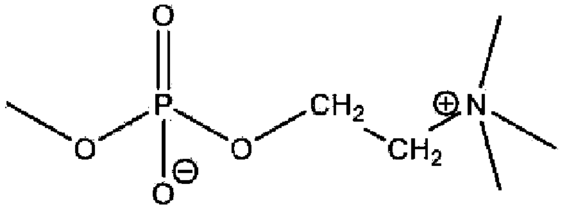

· · · Formula (6)

2. The monomer composition for a contact lens according to claim 1, wherein the component (C) is a hydroxy group-containing silicone monomer represented by the following formula (9) or formula (10).

[Chem. 6]

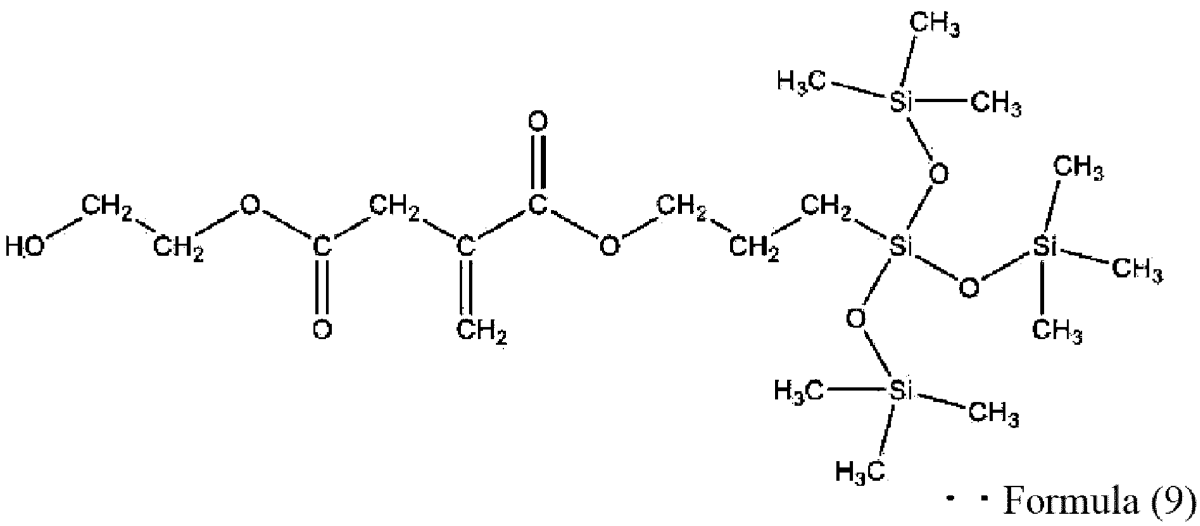

· · Formula (9)

[Chem. 7]

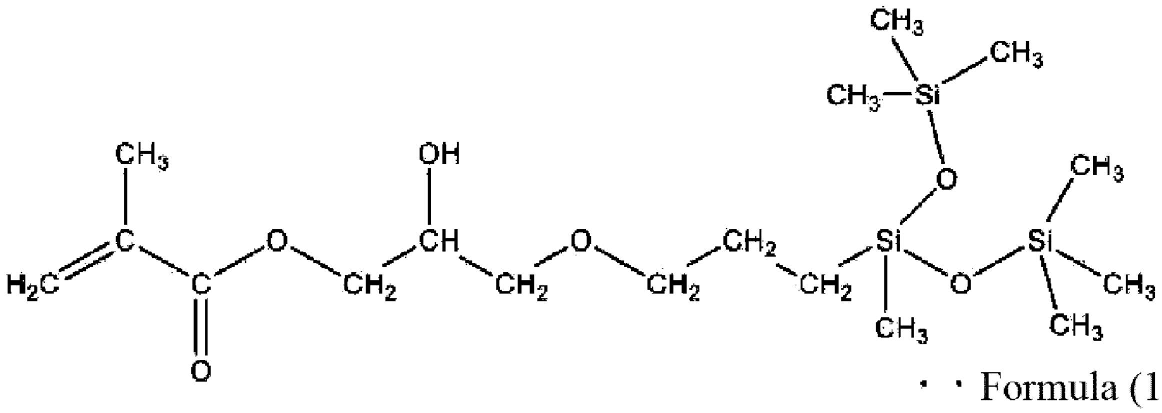

・・Formula (10)

3. The monomer composition for a contact lens according to claim 1 or 2, wherein in the monomer composition for a contact lens containing the components (A) to (F), a proportion of a phosphorylcholine group is 10 mass% or more, and a proportion of silicon is 10% or more.

4. A polymer for a contact lens, which is a polymer of the monomer composition for a contact lens according to claim 1 or 2.

5. A contact lens comprising:
a hydrate of the polymer for a contact lens according to claim 4.

6. The contact lens according to claim 5, which has an oxygen permeability Dk of $50 \times 10^{-11}$ ($cm^2$/sec)·($mLO_2$/mL $\times$ mmHg) or more.

## INTERNATIONAL SEARCH REPORT

International application No.
**PCT/JP2023/033357**

**A. CLASSIFICATION OF SUBJECT MATTER**

***G02C 7/04***(2006.01)i; ***C08F 290/06***(2006.01)i
FI: G02C7/04; C08F290/06

According to International Patent Classification (IPC) or to both national classification and IPC

**B. FIELDS SEARCHED**

Minimum documentation searched (classification system followed by classification symbols)

G02C7/04; C08F290/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/135421 A1 (NOF CORP.) 26 July 2018 (2018-07-26) paragraphs [0015]-[0021], [0037], [0050]-[0053] | 1-6 |
| Y | JP 2016-053165 A (DSM IP ASSETS BV) 14 April 2016 (2016-04-14) paragraphs [0002], [0011], [0015], [0024] | 1-6 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/033357**

| Patent document cited in search report | Publication date (day/month/year) | Patent family member(s) | Publication date (day/month/year) |
|---|---|---|---|
| WO 2018/135421 A1 | 26 July 2018 | CN 110199219 A | |
| JP 2016-053165 A | 14 April 2016 | US 2012/0136087 A1<br>paragraphs [0002], [0011], [0015], [0030]<br>EP 2444448 A1<br>CN 102803350 A<br>WO 2010/147779 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003215509 A
- JP 2018022174 A
- WO 2018135421 A
- WO 2020054711 A
- WO 2019194264 A
- JP 2022146674 A